# EUROPÄISCHE PATENTANMELDUNG

(11) **EP 1 207 065 A2**
(43) Veröffentlichungstag der Anmeldung: **22.05.2002**
(21) Anmeldenummer: 01126171.6
(22) Anmeldetag: 03.11.2001
(51) Int. Cl.: B60J 7/02, B62D 65/00

(54) **Fahrzeugdach mit einer Dachöffnung**

(30) Priorität: 16.11.2000 DE 10057169
(71) Anmelder: Webasto Vehicle Systems International GmbH, 82131 Stockdorf (DE)
(72) Erfinder: De Gaillard, Francois, 85390 Mouilleron en pareds (FR)
(74) Vertreter: Wiese, Gerhard

(57) **Zusammenfassung**

Die Erfindung betrifft ein Fahrzeugdach (1) mit einer Dachöffnung (4), die mittels wenigstens eines bewegbaren Abdeckelements (9) wahlweise verschließbar oder wenigstens zum Teil freigebbar ist, mit wenigstens einem am Rand (5) der Dachöffnung (4) unter einer festen Dachhaut angeordneten Verstärkungsrahmen (6). Sie zeichnet sich dadurch aus, daß zur Vergrößerung der nutzbaren Höhe des Fahrzeuginnenraums die feste Dachhaut in dem die Dachöffnung (4) umgebenden Bereich gegenüber dem übrigen Niveau der Dachfläche eine Aufwölbung (7) nach oben aufweist.

## Beschreibung

Die Erfindung betrifft ein Fahrzeugdach mit einer Dachöffnung, die mittels wenigstens eines bewegbaren Abdeckelements wahlweise verschließbar oder wenigstens zum Teil freigebbar ist, mit wenigstens einem am Rand der Dachöffnung unter einer festen Dachhaut angeordneten Verstärkungsrahmen.

Ein derartiges Fahrzeugdach ist im Fahrzeugbau allgemein bekannt und bedarf keines besonderen Nachweises. Die eine Dachöffnung umgebende feste Dachhaut einer Rohkarosserie, die für den Einbau eines Serien-Schiebedaches vorbereitet ist, weist stets einen meistens angeschweißten, am Rand der Dachöffnung unter einer festen Dachhaut angeordneten Verstärkungsrahmen auf. Derartige Dächer haben häufig den Nachteil, daß sie einschließlich der erforderlichen inneren Verkleidungsteile einen Teil der Bauhöhe des Innenraums beanspruchen und dadurch die zur Verfügung stehende Kopffreiheit der Insassen beschränken. Aus der DE 297 15 569 U1 ist ein Fahrzeugdach bekannt, an dessen eine Längskante sich eine Aufwölbung anschließt.

Aufgabe der Erfindung ist es, ein Fahrzeugdach zu schaffen, das für die Insassen im Bereich des wenigstens einen bewegbaren Abdeckelements eine erhöhte Kopffreiheit bereitstellt.

Diese Aufgabe wird durch ein Fahrzeugdach mit den Merkmalen des Anspruchs 1 gelöst. Vorteilhafte Ausgestaltungen der Erfindung sind in den Unteransprüchen angegeben.

Gemäß einer bevorzugten Ausführungsform entspricht die Höhe der Aufwölbung in etwa der Höhe des Verstärkungsrahmens. Weiterhin ist es vorteilhaft, wenn die Höhe des Abdeckelements in etwa der Höhe der Aufwölbung entspricht.

Gemäß einer weiteren bevorzugten Ausführungsform ist vorgesehen, daß der Verstärkungsrahmen aus einem wenigstens eine Sicke aufweisenden Blech besteht.

Für die Luftströmung ist es vorteilhaft, wenn die Aufwölbung am vorderen Rand der Dachöffnung nach Art eines Spoilers geformt ist oder dieser Dachöffnung ein Spoiler oder Windabweiser vorgelagert ist.

Besonders bevorzugt ist eine Ausführungsform, bei der die Aufwölbung unmittelbar aus dem Material der festen Dachhaut gefertigt ist.

Nachfolgend wird ein Ausführungsbeispiel eines Fahrzeugdachs unter Bezugnahme auf Zeichnungen näher erläutert. Es zeigt:
- Fig. 1: eine schematische perspektische Darstellung eines Fahrzeugdachs,
- Fig. 2: eine Variante zur Figur 1 mit einem in die Aufwölbung integrierten Querholm,
- Fig. 3: eine weitere Variante mit einer nach hinten verlängerten Aufwölbung,
- Fig. 4: einen Längsschnitt durch das Fahrzeugdach gemäß Figur 2 und
- Fig. 5: einen Längsschnitt entsprechend Figur 4 durch ein Fahrzeugdach gemäß dem Stand der Technik.

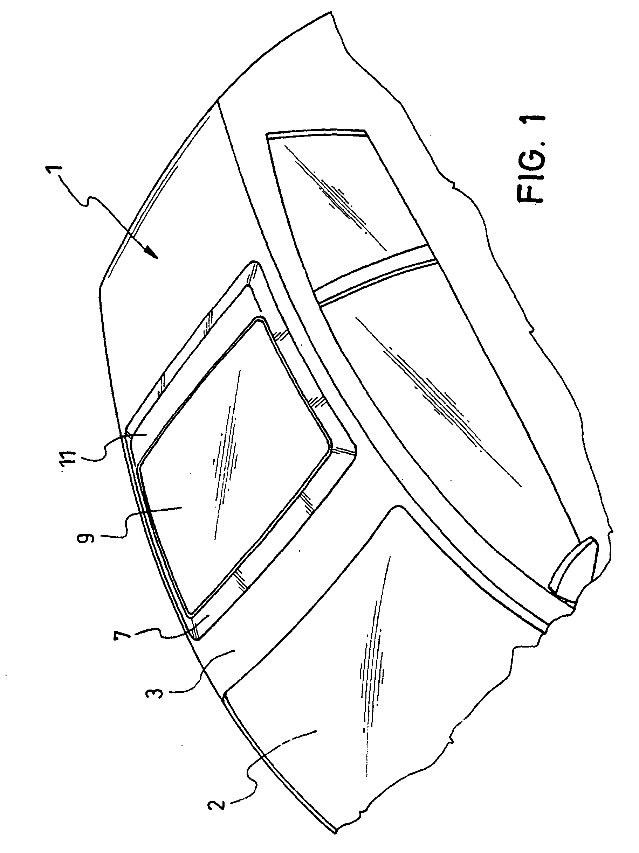

Bei einem Fahrzeugdach 1 gemäß Figur 1 schließt sich eine Windschutzscheibe 2 ein vorderer Querholm 3 an, der auch als Windlauf bezeichnet wird. Eine im Fahrzeugdach angeordnete Dachöffnung 4 ist im Bereich ihres Randes 5 an der Unterseite der festen Dachhaut mit einem Verstärkungsrahmen 6 versehen, der einteilig oder mehrteilig ausgebildet sein kann und typischerweise mit der festen Dachhaut durch Schweißen verbunden wird.

Die Dachöffnung 4 ist in einem Bereich angeordnet, in dem das feste Fahrzeugdach 1 eine Aufwölbung 7 aufweist, die sich über das übrige Niveau des festen Fahrzeugdachs 1 nach oben erstreckt. In dieser Aufwölbung sind sowohl der Verstärkungsrahmen 6, der bevorzugt durch wenigstens eine Sicke 12 versteift ist, als auch bevorzugt ein Querträger 8 angeordnet, der sich an den hinteren Rand 5 der Dachöffnung 4 anschließt.

Die Dachöffnung 4 ist mittels eines Abdeckelements 9 in Form eines starren Deckels verschließbar oder wahlweise zumindest teilweise freilegbar. Unterhalb des Fahrzeugdachs ist als Verkleidungsteil ein Innenhimmel 10 vorgesehen.

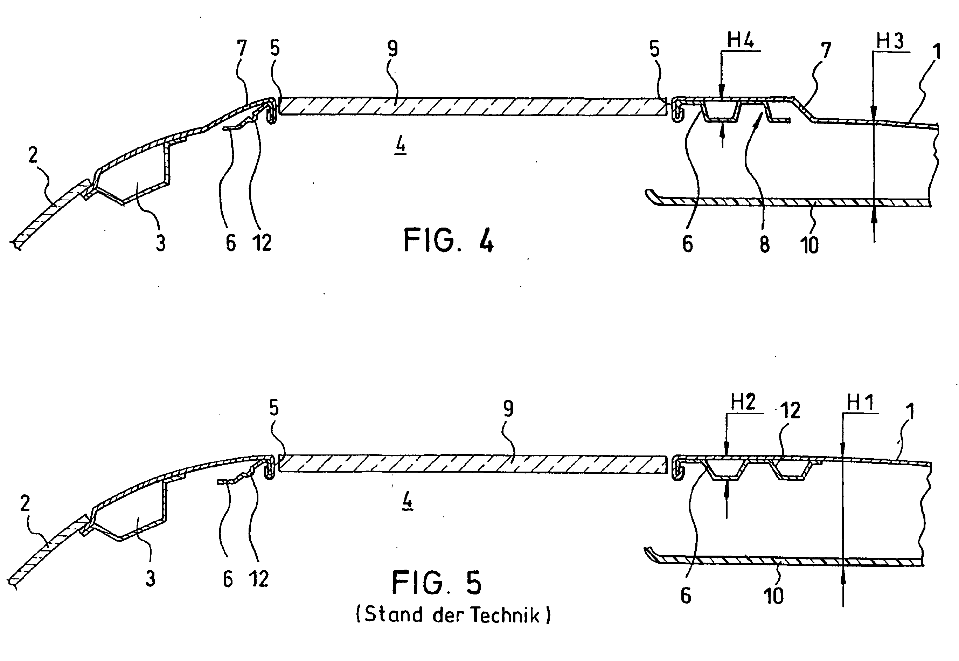

Beim Stand der Technik gemäß Figur 5 beträgt die Höhe H1 von der Oberkante des festen Fahrzeugdachs 1 bis zur Unterkante des Innenhimmels 10 etwa 50mm. Diese Höhe H1 umfaßt dabei auch die Höhe H2, die der Verstärkungsrahmen 6 in Verbindung mit dem nach unten abgeknickten Rand des festen Fahrzeugdachs einnimmt. Im Gegensatz dazu beträgt die Höhe H3 zwischen der Oberkante des festen Fahrzeugdachs 1 und der Unterkante des Innenhimmels 10 bei der Erfindung nur etwa 40mm, da dort die Höhe H4, die der Höhe des Verstärkungsrahmens 6 entspricht, außerhalb des normalen Niveaus des festen Fahrzeugdachs liegt.

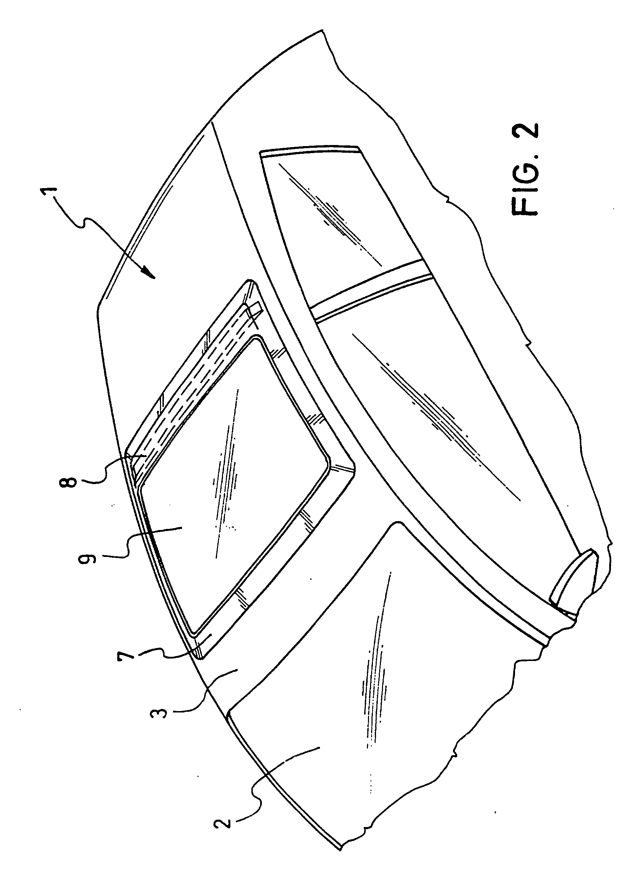

In Figur 2 ist im hinteren Teil der Aufwölbung 7 zusätzlich zum Verstärkungsrahmen 6 ein Querträger 8 der Fahrzeugkarosserie aufgenommen.

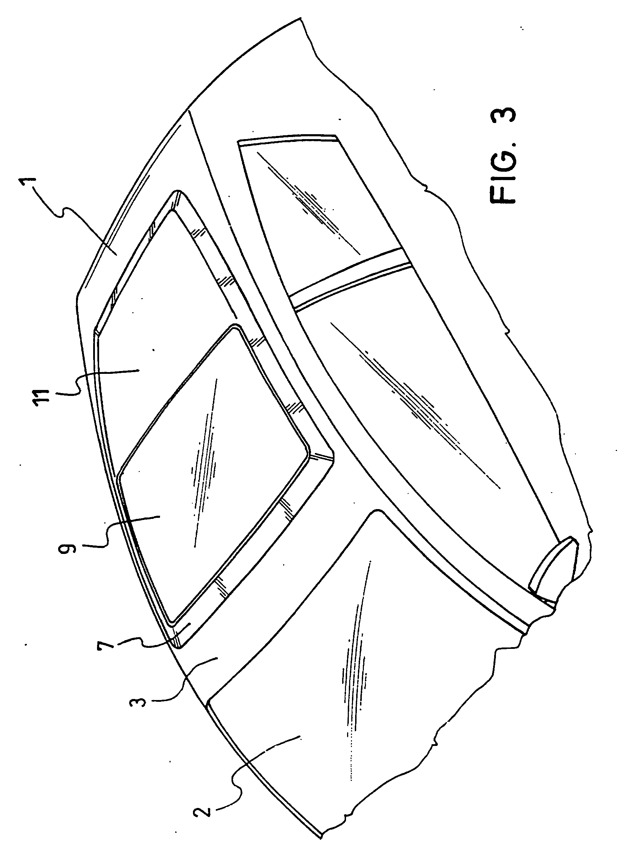

Bei der Variante gemäß Figur 3 ist die Aufwölbung 7 hinter der Dachöffnung 4 durch einen verlängerten Bereich 11 weiter nach hinten gezogen. Dadurch paßt auch ein absenkbares und nach hinten unter das feste Fahrzeugdach verschiebbares Abdeckelement 9 noch vollständig in den Bereich der Aufwölbung 7 hinein, so daß sich auf für die hinteren Passagiere keine Beschränkung der Kopffreiheit ergibt.

### Bezugszeichenliste

- 1: Fahrzeugdach
- 2: Windschutzscheibe
- 3: Querholm (Windlauf)
- 4: Dachöffnung
- 5: Rand (von 4)
- 6: Verstärkungsrahmen
- 7: Aufwölbung (von 1)
- 8: Querträger
- 9: Deckel
- 10: Innenhimmel
- 11: Verlängerter Bereich (von 7)
- 12: Sicke
- H1: Höhe des öffnungsfähigen Dachs (beim Stand der Technik)
- H2: Höhe des festen Fahrzeugdachs (einschließlich des Verstärkungsrahmens)
- H3: Höhe des öffnungsfähigen Dachs (bei der Erfindung)
- H4: Höhe des festen Fahrzeugdachs (einschließlich des Verstärkungsrahmens)

## Patentansprüche

1. Fahrzeugdach (1) mit einer Dachöffnung (4), die mittels wenigstens eines bewegbaren Abdeckelements (9) wahlweise verschließbar oder wenigstens zum Teil freigebbar ist, mit wenigstens einem am Rand (5) der Dachöffnung (4) unter einer festen Dachhaut angeordneten Verstärkungsrahmen (6), **dadurch gekennzeichnet, daß** die feste Dachhaut in dem die Dachöffnung (4) vollständig umgebenden Bereich gegenüber dem übrigen Niveau der Dachfläche eine Aufwölbung (7) nach oben aufweist.

2. Fahrzeugdach nach Anspruch 1, **dadurch gekennzeichnet, daß** die Höhe der Aufwölbung (8) in etwa der Höhe des Verstärkungsrahmens (6) entspricht.

3. Fahrzeugdach nach einem der vorhergehenden Ansprüche, **dadurch gekennzeichnet, daß** die Höhe des Abdeckelements (9) in etwa der Höhe der Aufwölbung (7) entspricht.

4. Fahrzeugdach nach einem der vorhergehenden Ansprüche, **dadurch gekennzeichnet, daß** der Verstärkungsrahmen (6) aus einem wenigstens eine Sicke (12) aufweisenden Blech besteht.

5. Fahrzeugdach nach einem der vorhergehenden Ansprüche, **dadurch gekennzeichnet, daß** die Aufwölbung (7) am vorderen Rand der Dachöffnung (4) nach Art eines Spoilers geformt ist oder der Aufwölbung (7) ein Spoiler oder Windabweiser vorgelagert ist.

6. Fahrzeugdach, nach einem der vorhergehenden Ansprüche, **dadurch gekennzeichnet, daß** die Aufwölbung (7) unmittelbar aus dem Material der festen Dachhaut heraus geformt ist.

7. Fahrzeugdach, nach einem der vorhergehenden Ansprüche, **dadurch gekennzeichnet, daß** die Aufwölbung.(7) sich vom hinteren Rand (5) der Dachöffnung (4) aus weiter nach hinten erstreckt, als vom vorderen Rand (5) der Dachöffnung (4) nach vorn.

8. Fahrzeugdach, nach einem der vorhergehenden Ansprüche, **dadurch gekennzeichnet, daß** die Aufwölbung.(7) hinter dem hinteren Rand (5) der Dachöffnung (4) einen Querträger (8) der Fahrzeugkarosserie aufnimmt.
